# EUROPEAN PATENT APPLICATION

(11) **EP 4 277 083 A1**
(43) Date of publication of application: **15.11.2023**
(21) Application number: 21917710.2
(22) Date of filing: 24.12.2021
(51) Int. Cl.: H02J 50/12, H02J 7/00

(54) **WIRELESS ELECTRIC POWER SUPPLY DEVICE AND WIRELESS ELECTRIC POWER SUPPLY SYSTEM**

(30) Priority: 05.01.2021 JP 2021000408
(71) Applicant: Josho Gakuen Educational Foundation, Osaka 535-8585 (JP); KAWASAKI JUKOGYO KABUSHIKI KAISHA, Kobe-shi, Hyogo 650-8670 (JP)
(72) Inventor: OMORI, Hideki, Osaka-shi, Osaka 535-8585 (JP); SAKAI, Ryota, Hyogo 650-8670 (JP); IWANAGA, Taichi, Osaka-shi, Osaka 535-8585 (JP)
(74) Representative: Müller-Boré & Partner Patentanwälte PartG mbB
(86) International application number: PCT/JP2021/048183
(87) International publication number: WO 2022/149490

(57) **Abstract**

A wireless power supply device (1) includes a first turn-on control circuit (31) to control a turn-on timing of a switching device (SW), and a second turn-on control circuit (32) to control a turn-on timing of an auxiliary switching device (SWₛ), and the switching device (SW) and the auxiliary switching device (SWₛ) are operable to perform a zero voltage switching operation.

## Description

### Technical Field

The present disclosure relates to a wireless power supply device and a wireless power supply system. Such a wireless power supply device and a wireless power supply system are disclosed in Japanese Patent No. 6038386, Japanese Patent Laid-Open No. 2020-078232, and T. Takahashi and H. Omori, "A New Control Method of One-Switch Wireless V2H with a Combination of Resonant Selector and Voltage Changer" INTERNATIONAL CONFERENCE ON RENEWABLE ENERGY RESEARCH AND APPLICATIONS (ICRERA) 2019 (hereinafter referred to as T. Takahashi et al.), for example.

### Background Art

Conventionally, a mobile vehicle such as an electric vehicle that runs on an electric motor requires connection to a power supply device via a power cable for charging. Therefore, it takes time and effort for a user to perform charging.

In order to solve this problem, Japanese Patent No. 6038386 discloses a bidirectional non-contact power supply device that supplies power using a magnetic field coupling between coils without using a power cable. In Japanese Patent No. 6038386, the bidirectional non-contact power supply device includes a self coil coupled to another coil through a magnetic field coupling therebetween, a capacitor connected in series to the self coil, and an inverter. The inverter is configured by connecting a plurality of semiconductor switching devices in a full bridge.

However, in Japanese Patent No. 6038386, the inverter includes the plurality of semiconductor switching devices, and thus the configuration of the bidirectional non-contact power supply device becomes complex (the size of the bidirectional non-contact power supply device becomes larger). In order to solve this problem, Japanese Patent Laid-Open No. 2020-078232 discloses a single-ended wireless power supply device including a transmission coil, a switching device connected in series to the transmission coil, and a resonance capacitor connected in parallel to the transmission coil. In Japanese Patent Laid-Open No. 2020-078232, the device is driven by the single switching device, and thus it is possible to simplify the configuration of the wireless power supply device. Furthermore, in the single-ended wireless power supply device disclosed in Japanese Patent Laid-Open No. 2020-078232, the switching device is turned on (zero voltage switching operation) when a resonance voltage generated by the transmission coil and the resonance capacitor is zero.

The frequency of power to be transmitted may be required to be within a predetermined frequency range according to international standards, for example. Moreover, a user may desire to make the amount of power to be transmitted variable. However, in a conventional single-ended wireless power supply device as described in Japanese Patent Laid-Open No. 2020-078232, it is necessary to change the turn-on timing of a switching device when the amount of power to be transmitted is changed while the frequency of the power to be transmitted is maintained within a predetermined frequency range. Therefore, the switching device may be turned on when the resonance voltage is not zero, and the zero voltage switching operation may not be possible.

In order to solve this problem, T. Takahashi et al. change a voltage supplied to an inverter by a DC-DC converter to change the amount of power to be transmitted while maintaining the frequency of the power to be transmitted within a predetermined frequency range.

### Prior Art

### Patent Document

Patent Document 1: Japanese Patent No. 6038386
Patent Document 2: Japanese Patent Laid-Open No. 2020-078232
Non-Patent Document 1: T. Takahashi and H. Omori, "A New Control Method of One-Switch Wireless V2H with a Combination of Resonant Selector and Voltage Changer" INTERNATIONAL CONFERENCE ON RENEWABLE ENERGY RESEARCH AND APPLICATIONS (ICRERA) 2019

### Summary of the Invention

However, T. Takahashi et al. change the amount of power to be transmitted while maintaining the frequency of the power to be transmitted within the predetermined frequency range, and thus the DC-DC converter is required. The DC-DC converter includes a relatively large number of devices such as switching devices, choke coils, capacitors, and diodes. Therefore, the configuration of a wireless power supply device becomes complex and expensive.

The present disclosure is intended to solve the above problems. The present disclosure aims to provide a wireless power supply device and a wireless power supply system each capable of maintaining zero voltage switching with low switching loss and changing the amount of power to be transmitted while reducing or preventing the complex and expensive device configuration.

In order to attain the aforementioned object, a wireless power supply device according to a first aspect of the present disclosure is single-ended, and includes a power supply unit to supply power to a power receiving unit, and a controller configured or programmed to control the power supply unit. The power supply unit includes a transmission coil and a switching device connected in series to a DC power supply, a resonance capacitor connected in parallel to at least one of the transmission coil or the switching device, an auxiliary switching device connected in parallel to the transmission coil or the switching device, and a voltage limiting capacitor connected in parallel to the transmission coil or the switching device to limit a resonance voltage generated by the transmission coil and the resonance capacitor, and the auxiliary switching device is connected in series to the voltage limiting capacitor. The controller includes a first turn-on control circuit to control a turn-on timing of the switching device based on the resonance voltage generated by the transmission coil and the resonance capacitor, and a second turn-on control circuit to control a turn-on timing of the auxiliary switching device based on a gate signal of the switching device or the resonance voltage generated by the transmission coil and the resonance capacitor. The switching device and the auxiliary switching device are operable to perform a zero voltage switching operation.

In the wireless power supply device according to the first aspect of the present disclosure, as described above, the power supply unit includes the auxiliary switching device connected in parallel to the transmission coil or the switching device, and the voltage limiting capacitor connected in parallel to the transmission coil or the switching device to limit the resonance voltage generated by the transmission coil and the resonance capacitor, and the auxiliary switching device is connected in series to the voltage limiting capacitor. Accordingly, even when the amount of power to be transmitted is changed by changing the conduction time of the switching device, the conduction time of the auxiliary switching device is adjusted such that the timing at which the resonance voltage becomes zero can be adjusted. Thus, the zero voltage switching operation of the switching device can be maintained. The auxiliary switching device and the voltage limiting capacitor are simply provided in the power supply unit such that the amount of power to be transmitted can be changed while the switching device performs the zero voltage switching operation, and thus the complex configuration of the wireless power supply device can be reduced or prevented unlike a case in which a DC-DC converter including a relatively large number of devices is provided in the power supply unit to change the amount of power to be transmitted. Consequently, zero voltage switching with low switching loss can be maintained, and the amount of power to be transmitted can be changed while the complex and expensive configuration of the wireless power supply device is reduced or prevented.

Furthermore, the zero voltage switching operation is performed in the entire range in which the amount of power to be transmitted is changed, and thus heat generation of the switching device due to switching of the switching device while a voltage is applied to the switching device can be reduced or prevented. Thus, the configuration of a cooling mechanism that cools the switching device can be simplified (downsized).

A wireless power supply system according to a second aspect of the present disclosure is single-ended, and includes a power supply unit, a power receiving unit to which power is supplied by the power supply unit, and a controller configured or programmed to control the power supply unit. The power supply unit includes a first transmission coil and a first switching device connected in series to a DC power supply, a first resonance capacitor connected in parallel to at least one of the first transmission coil or the first switching device, a first auxiliary switching device connected in parallel to the first transmission coil or the first switching device, and a first voltage limiting capacitor connected in parallel to the first transmission coil or the first switching device to limit a resonance voltage generated by the first transmission coil and the first resonance capacitor, and the first auxiliary switching device is connected in series to the first voltage limiting capacitor. The power receiving unit includes a second transmission coil, a second resonance capacitor and a rectifier circuit connected in parallel or in series to the second transmission coil, and a load connected to the rectifier circuit. The controller includes a first turn-on control circuit to control a turn-on timing of the first switching device based on the resonance voltage generated by the first transmission coil and the first resonance capacitor, and a second turn-on control circuit to control a turn-on timing of the first auxiliary switching device based on a gate signal of the first switching device or the resonance voltage generated by the first transmission coil and the first resonance capacitor. The first switching device and the first auxiliary switching device are operable to perform a zero voltage switching operation.

In the wireless power supply system according to the second aspect of the present disclosure, as described above, the power supply unit includes the first auxiliary switching device connected in parallel to the first transmission coil or the first switching device, and the first voltage limiting capacitor connected in parallel to the first transmission coil or the first switching device to limit the resonance voltage generated by the first transmission coil and the first resonance capacitor, and the first auxiliary switching device is connected in series to the first voltage limiting capacitor. Accordingly, even when the amount of power to be transmitted is changed by changing the conduction time of the first switching device, the conduction time of the first auxiliary switching device is adjusted such that the timing at which the resonance voltage becomes zero can be adjusted. Thus, the zero voltage switching operation of the first switching device can be maintained. The first auxiliary switching device and the first voltage limiting capacitor are simply provided in the power supply unit such that the amount of power to be transmitted can be changed while the first switching device performs the zero voltage switching operation, and thus the complex configuration of the wireless power supply system can be reduced or prevented unlike a case in which a DC-DC converter including a relatively large number of devices is provided in the power supply unit to change the amount of power to be transmitted. Consequently, it is possible to provide the wireless power supply system capable of maintaining zero voltage switching with low switching loss and changing the amount of power to be transmitted while reducing or preventing the complex and expensive configuration of the wireless power supply system.

Furthermore, the zero voltage switching operation is performed in the entire range in which the amount of power to be transmitted is changed, and thus heat generation of the switching device due to switching of the switching device while a voltage is applied to the switching device can be reduced or prevented. Thus, it is possible to provide the wireless power supply system capable of simplifying (downsizing and noise reduction) the configuration of a cooling mechanism that cools the switching device.

In the configuration according to the second aspect, a resonance operation is performed by the second transmission coil and the second resonance capacitor in the power receiving unit, and thus the transmission power can be increased by a resonance action in magnetic coupling.

According to the present disclosure, as described above, it is possible to maintain the zero voltage switching with low switching loss and change the amount of power to be transmitted while reducing or preventing the complex and expensive device configuration.

### Brief Description of the Drawings

FIG. 1 is a block diagram showing the configuration of a wireless power supply system (wireless power supply device) according to a first embodiment.
FIG. 2 is a circuit diagram showing a half-wave rectifier circuit.
FIG. 3 is a circuit diagram showing a full-wave rectifier circuit.
FIG. 4 is a circuit diagram showing a voltage doubler rectifier circuit.
FIG. 5 is a circuit diagram showing a resistor as a load.
FIG. 6 is a circuit diagram showing a circuit in which a resistor as a load and a capacitor are connected in parallel to each other.
FIG. 7 is a circuit diagram showing a storage battery as a load.
FIG. 8 is a diagram showing a timing chart of control of the wireless power supply system according to the first embodiment.
FIG. 9 is a diagram showing a relationship between the conduction time of a switching device and each of power to be transmitted, frequency, and the conduction time of an auxiliary switching device in the wireless power supply system according to the first embodiment.
FIG. 10 is a block diagram showing the configuration of a wireless power supply system according to a second embodiment.
FIG. 11 is a diagram showing a timing chart of control of the wireless power supply system according to the second embodiment.
FIG. 12 is a block diagram showing the configuration of a wireless power supply system according to a third embodiment.
FIG. 13 is a block diagram showing the configuration of a wireless power supply system according to a fourth embodiment.

### Modes for Carrying Out the Invention

Embodiments embodying the present disclosure are hereinafter described on the basis of the drawings.

### First Embodiment

### Operation of Wireless Power Supply Device

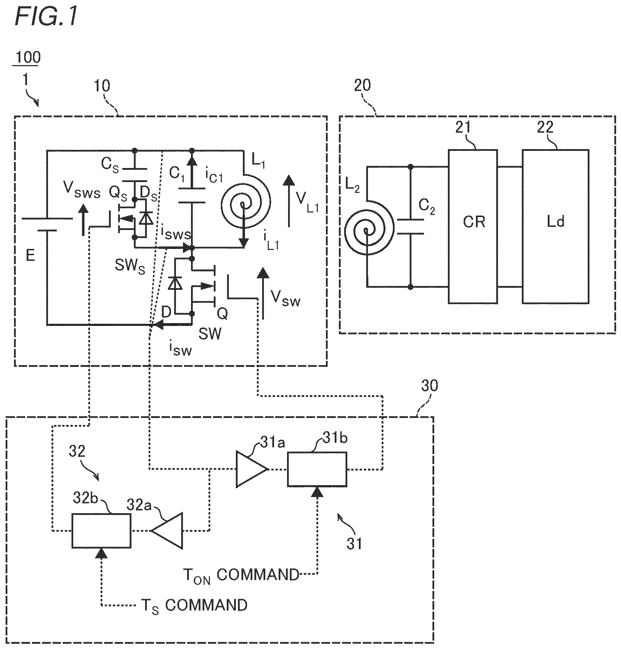

The configuration of a wireless power supply system 100 according to a first embodiment is now described with reference to FIGS. 1 to 9.

The wireless power supply system 100 is a single-ended wireless power supply system. The wireless power supply system 100 includes a power supply unit 10 and a power receiving unit 20 to which power is supplied by the power supply unit 10. The wireless power supply system 100 also includes a controller 30 that controls the power supply unit 10. A wireless power supply device 1 includes the power supply unit 10 and the controller 30.

The power supply unit 10 includes a transmission coil L₁ and a switching device SW connected in series to a DC power supply E. The DC power supply E is a storage battery installed at home, for example. The transmission coil L₁ and the switching device SW are examples of a first transmission coil and a first switching device, respectively.

The switching device SW includes a transistor Q and a diode D connected in antiparallel to the transistor Q. The transistor Q is an N-type MOSFET (metal-oxide-semiconductor field-effect transistor), for example. The transistor Q may be a self-turn-off switching device (such as an insulated gate bipolar transistor (IGBT)) other than a MOSFET.

The power supply unit 10 also includes a resonance capacitor C₁ connected in parallel to at least one (the transmission coil L₁ in the first embodiment) of the transmission coil L₁ or the switching device SW. The resonance capacitor C₁ is a film capacitor, for example. The resonance capacitor C₁ may be a ceramic capacitor. The resonance capacitor C₁ is an example of a first resonance capacitor.

In the first embodiment, the power supply unit 10 includes an auxiliary switching device SW_{S} and a voltage limiting capacitor C_{S}. The auxiliary switching device SW_{S} is connected in parallel to the transmission coil L₁ or the switching device SW (the transmission coil L₁ in the first embodiment) and is connected in series to the voltage limiting capacitor C_{S}. The voltage limiting capacitor C_{S} is connected in parallel to the transmission coil L₁ or the switching device SW (the transmission coil L₁ in the first embodiment) to limit a resonance voltage generated by the transmission coil L₁ and the resonance capacitor C₁. The voltage limiting capacitor C_{S} is an example of a first voltage limiting capacitor. The auxiliary switching device SW_{S} is an example of a first auxiliary switching device.

The auxiliary switching device SW_{S} includes a transistor Q_{S} and a diode D_{S} connected in antiparallel to the transistor Q_{S}. The transistor Q_{S} is an N-type MOSFET, for example. The transistor Q_{S} may be a self-turn-off switching device (such as an IGBT) other than a MOSFET.

In the first embodiment, the capacitance of the voltage limiting capacitor C_{S} is five or more times larger than the capacitance of the resonance capacitor C₁. For example, the capacitance of the resonance capacitor C₁ is 0.1 µF. The capacitance of the voltage limiting capacitor C_{S} is 0.5 µF or more and 5 µF or less, for example. According to an empirical rule, necessary and sufficient voltage stability can be obtained during clamping when the capacitance of the voltage limiting capacitor C_{S} is five or more times the capacitance of the resonance capacitor C1.

In the power supply unit 10, the positive side of the DC power supply E, the positive side of the voltage limiting capacitor C_{S}, the positive side of the resonance capacitor C₁, and the positive side of the transmission coil L₁ are electrically connected to each other. The negative side of the voltage limiting capacitor C_{S} and a drain (a cathode of the diode D_{S}) of the transistor Q_{S} of the auxiliary switching device SW_{S} are electrically connected to each other. A source (an anode of the diode D_{S}) of the transistor Q_{S} of the auxiliary switching device SW_{S}, the negative side of the resonance capacitor C₁, the negative side of the transmission coil L₁, and a drain (a cathode of the diode D) of the transistor Q of the switching device SW are electrically connected to each other. A source (an anode of the diode D) of the transistor Q of the switching device SW and the negative side of the DC power supply E are electrically connected to each other.

In the first embodiment, the power supply unit 10 includes the controller 30 that controls the power supply unit 10. The controller 30 includes a turn-on control circuit 31 and a turn-on control circuit 32. The turn-on control circuit 31 and the turn-on control circuit 32 are examples of a first turn-on control circuit and a second turn-on control circuit, respectively.

In the first embodiment, the turn-on control circuit 31 controls the turn-on timing of the switching device SW based on the resonance voltage generated by the transmission coil L₁ and the resonance capacitor C₁. Specifically, the turn-on control circuit 31 includes a resonance voltage detection circuit 31a and a cycle synchronization circuit 31b. The resonance voltage detection circuit 31a detects the resonance voltage generated by the transmission coil L₁ and the resonance capacitor C₁ by measuring a voltage V_{Li} across the transmission coil L₁ (resonance capacitor C₁). The cycle synchronization circuit 31b controls the turn-on timing of the switching device SW based on the resonance voltage detected by the resonance voltage detection circuit 31a. Specifically, the cycle synchronization circuit 31b controls turning on of the switching device SW in synchronization with the resonance voltage such that the switching device SW performs a zero voltage switching operation. The resonance voltage detection circuit 31a is an example of a first resonance voltage detection circuit.

In the first embodiment, the turn-on control circuit 32 controls the turn-on timing of the auxiliary switching device SW_{S} based on the resonance voltage generated by the transmission coil L₁ and the resonance capacitor C₁. Specifically, the turn-on control circuit 32 includes a resonance voltage detection circuit 32a and a cycle synchronization circuit 32b. The resonance voltage detection circuit 32a detects the resonance voltage generated by the transmission coil L₁ and the resonance capacitor C₁ by measuring the voltage V_{Li} across the transmission coil L₁ (resonance capacitor C₁). The cycle synchronization circuit 32b controls the turn-on timing of the auxiliary switching device SW_{S} based on the resonance voltage detected by the resonance voltage detection circuit 32a. Specifically, the cycle synchronization circuit 32b controls turning on of the auxiliary switching device SW_{S} in synchronization with the resonance voltage such that the auxiliary switching device SW_{S} performs a zero voltage switching operation. The resonance voltage detection circuit 32a is an example of a second resonance voltage detection circuit.

In the first embodiment, the conduction time T_{ON} of the switching device SW and the conduction time T_{S} of the auxiliary switching device SW_{S} are controlled such that the frequency of the power to be transmitted from the transmission coil L₁ is within a predetermined frequency range. In the first embodiment, the frequency range is from 80 kHz to 90 kHz.

In the first embodiment, the sum of the conduction time T_{ON} of the switching device SW and the conduction time T_{S} of the auxiliary switching device SW_{S} is controlled to be within a predetermined time range. One cycle of the power (AC) to be transmitted is approximately represented by the sum of the conduction time T_{ON} of the switching device SW, the conduction time T_{S} of the auxiliary switching device SWₛ, and a period of time over which the resonance voltage changes (increases or decreases). The period of time over which the resonance voltage changes is a value determined by the one-half power (VLC) of the product of the inductance L of the transmission coil L₁ and the capacitance C of the resonance capacitor C₁, and is substantially constant. Therefore, the sum of the conduction time T_{ON} of the switching device SW and the conduction time T_{S} of the auxiliary switching device SW_{S} is controlled to be within the predetermined time range such that the frequency, which is the reciprocal of one cycle of the power to be transmitted, is 80 kHz or more and 90 kHz or less.

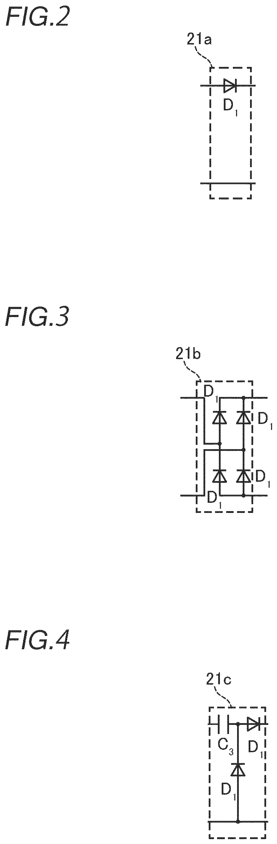

In the first embodiment, the power receiving unit 20 includes a transmission coil L₂, a resonance capacitor C₂ and a rectifier circuit 21 (CR) connected in parallel or in series (in the first embodiment, in parallel) to the transmission coil L₂, and a load 22 (Ld) connected to the rectifier circuit 21. The rectifier circuit 21 is a half-wave rectifier circuit including one diode D₁, as shown in FIG. 2, for example. Alternatively, the rectifier circuit 21 may be a full-wave rectifier circuit including four diodes D₁, as shown in FIG. 3, for example. Alternatively, the rectifier circuit 21 may be a voltage doubler rectifier circuit including two diodes D₁ and one capacitor C₃, as shown in FIG. 4, for example. The transmission coil L₂ is an example of a second transmission coil. The resonance capacitor C₂ is an example of a second resonance capacitor.

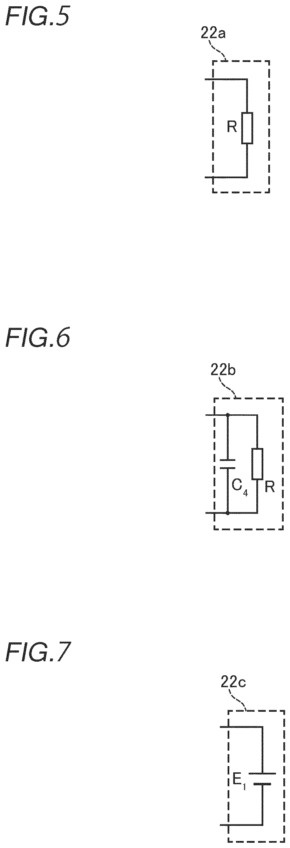

As shown in FIG. 5, the load 22 is a resistor R, for example. Alternatively, the load 22 may be a circuit in which a resistor R and a capacitor C₄ are connected in parallel to each other, as shown in FIG. 6.
Alternatively, the load 22 may be a storage battery E₁, as shown in FIG. 7.

### Operation of Wireless Power Supply Device

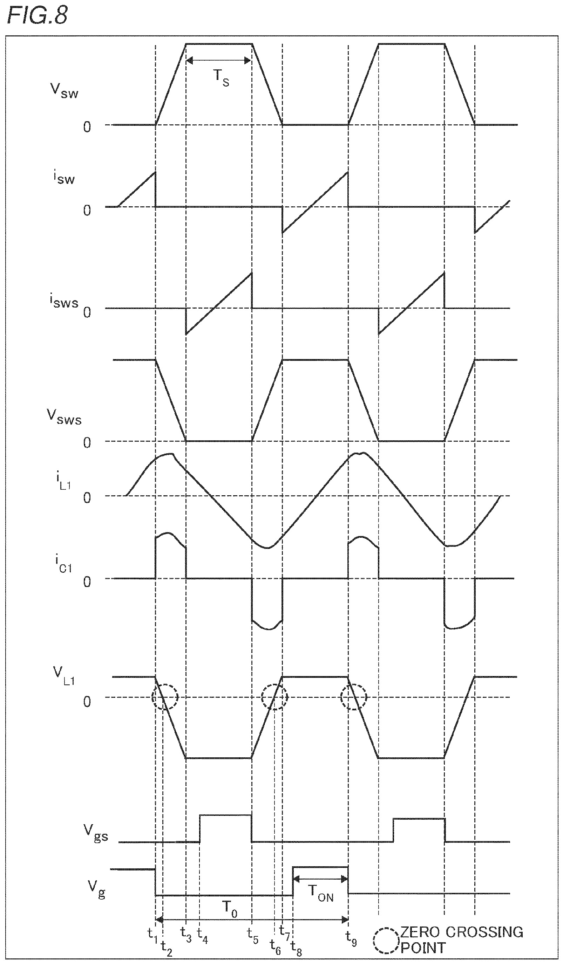

The operation of the wireless power supply device 1 is now described with reference to FIG. 8. V_{SW} in FIG. 8 is the waveform of a voltage V_{SW} across the switching device SW, i_{SW} in FIG. 8 is the waveform of a current i_{SW} flowing through the switching device SW, i_{SWS} in FIG. 8 is the waveform of a current i_{SWS} flowing through the auxiliary switching device SW_{S}, Vsws in FIG. 8 is the waveform of a voltage V_{SWS} across the auxiliary switching device SWₛ, i_{L1} in FIG. 8 is the waveform of a current i_{L1} flowing through the transmission coil L₁, i_{C1} in FIG. 8 is the waveform of a current i_{C1} flowing through the resonance capacitor C₁, V_{L1} in FIG. 8 is the waveform of a voltage V_{L1} across the transmission coil L₁, V_{gs} in FIG. 8 is the waveform of the gate voltage V_{gs} of the auxiliary switching device SWₛ, and V_{g} in FIG. 8 is the waveform of the gate voltage V_{g} of the switching device SW.

During a period from time t₁ to time t₃, both the switching device SW and the auxiliary switching device SW_{S} are in an off state. The voltage V_{SW} across the switching device SW gradually increases due to resonance of the transmission coil L₁ and the resonance capacitor C₁. A forward current i_{C1} flows through the resonance capacitor C1.

At the time t₃, the diode D_{S} of the auxiliary switching device SW_{S} automatically becomes conductive, and the auxiliary switching device SW_{S} becomes conductive. Thus, the current i_{SWS} flowing through the auxiliary switching device SW_{S} flows in the negative direction. The capacitance of the voltage limiting capacitor C_{S} is sufficiently larger than the capacitance of the resonance capacitor C₁, and thus the voltage V_{SW} across the switching device SW (the voltage V_{L1} across the transmission coil L₁) is substantially constant (clamped).

When the resonance voltage detection circuit 32a detects the zero crossing point (time t₂) of the voltage V_{L1} across the transmission coil L₁ during the period from the time t₁ to the time t₃, the gate voltage V_{gs} of the auxiliary switching device SW_{S} is switched from an L level to an H level to cause the transistor Q_{S} of the auxiliary switching device SW_{S} to be conductive, based on the zero crossing point (time t₂) at time t₄. That is, the cycle synchronization circuit 32b turns on the auxiliary switching device SW_{S} such that the auxiliary switching device SW_{S} performs the zero voltage switching operation. Thus, when the current i_{SWS} flowing through the auxiliary switching device SW_{S} is commutated from negative to positive, it is smoothly switched to a positive-going current.

The auxiliary switching device SW_{S} may be turned on at the time t₃ in order to cause the auxiliary switching device SW_{S} to perform the zero voltage switching operation. On the other hand, the time t₃ may shift depending on the state of the load 22, and thus in the first embodiment, the auxiliary switching device SW_{S} is turned on at the time t₄, which is slightly after the time t₃.

During the conduction time T_{S} of the auxiliary switching device SWₛ, the current i_{SWS} flowing through the auxiliary switching device SW_{S} increases linearly. When the current isws is commutated from negative to positive, the current flowing through the diode D_{S} connected in antiparallel smoothly flows through the transistor Q_{S}, and thus the auxiliary switching device SW_{S} remains conductive.

Then, at time t₅, the turn-on control circuit 32 (cycle synchronization circuit 32b) switches the gate voltage V_{gs} of the auxiliary switching device SW_{S} from the H level to the L level to turn off the transistor Q_{S} of the auxiliary switching device SW_{S}. Thus, the auxiliary switching device SW_{S} is turned off, and the voltage V_{SWS} across the auxiliary switching device SW_{S} gradually increases. On the other hand, the voltage V_{SW} across the switching device SW gradually decreases, and the voltage V_{L1} (resonance voltage) across the transmission coil L₁ gradually increases.

The conduction time T_{S} of the auxiliary switching device SW_{S} is preset based on the conduction time T_{ON} of the switching device SW. Specifically, the conduction time T_{ON} of the switching device SW is preset according to the amount of power to be transmitted from the transmission coil L₁. The period of time (non-constant period of time) over which the resonance voltage changes as described above is a value determined by the one-half power (VLC) of the product of the inductance L of the transmission coil L₁ and the capacitance C of the resonance capacitor C₁, and is substantially constant. The conduction time T_{S} of the auxiliary switching device SW_{S} is preset such that the frequency of the power to be transmitted from the transmission coil L₁ is within the predetermined frequency range (80 kHz or more and 90 kHz or less) .

The voltage V_{SW} across the switching device SW gradually decreases, and at time t₇, the diode D of the switching device SW automatically becomes conductive, and the switching device SW becomes conductive. Thus, the current i_{SW} flowing through the switching device SW flows in the negative direction.

When the voltage V_{L1} (resonance voltage) across the transmission coil L₁ gradually increases, and the resonance voltage detection circuit 31a detects the zero crossing point (time t₆) of the voltage V_{L1} across the transmission coil L₁, the gate voltage V_{g} of the switching device SW is switched from an L level to an H level to cause the transistor Q of the switching device SW to be conductive, based on the zero crossing point (time t₆) at time t₈. That is, the cycle synchronization circuit 31b turns on the switching device SW such that the switching device SW performs the zero voltage switching operation. Thus, when the current i_{SW} flowing through the switching device SW is commutated from negative to positive, it is smoothly switched to a positive-going current.

The switching device SW may be turned on at the time t₇ in order to cause the switching device SW to perform the zero voltage switching operation. On the other hand, the time t₇ may shift depending on the state of the load 22, and thus in the first embodiment, the switching device SW is turned on at the time t₈, which is slightly after the time t₇.

During the conduction time T_{ON} of the switching device SW, the current i_{SW} flowing through the switching device SW increases linearly. When the current i_{SW} is commutated from negative to positive, the current flowing through the diode D smoothly flows through the transistor Q, and thus the switching device SW remains conductive.

Then, at time t₉, the turn-on control circuit 31 (cycle synchronization circuit 31b) switches the gate voltage V_{g} of the switching device SW from the H level to the L level to turn off the transistor Q of the auxiliary switching device SW_{S}. Thus, the switching device SW is turned off, the current i_{L1} stored in the transmission coil L₁ flows into the resonance capacitor C₁, and the transmission coil L₁ and the resonance capacitor C₁ enter a resonant state. That is, the voltage V_{L1} (resonance voltage) across the transmission coil L₁ gradually increases in the negative direction. The voltage V_{SW} across the switching device SW gradually increases in the positive direction.

Due to the above operation, a sinusoidal current i_{L1} flows through the transmission coil L₁ from the time t₁ to the time t₉ such that power is supplied from the transmission coil L₁ of the power supply unit 10 to the transmission coil L₂ of the power receiving unit 20.

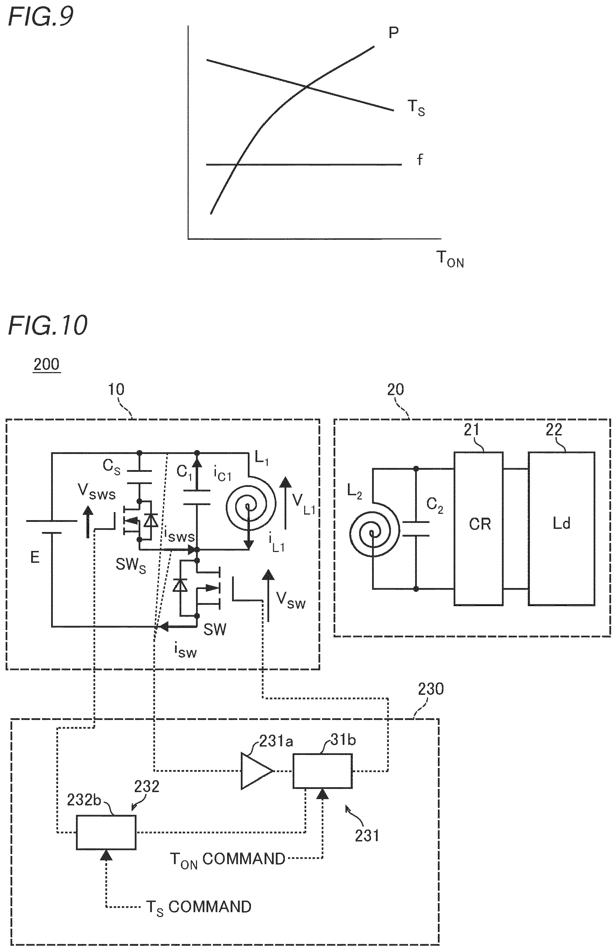

The operating characteristics of the wireless power supply device 1 according to the first embodiment is now described with reference to FIG. 9.

In the wireless power supply device 1, the power (P in FIG. 9) to be transmitted from the transmission coil L₁ increases by increasing the length of the conduction time T_{ON} of the switching device SW. As the length of the conduction time T_{ON} of the switching device SW is increased, the length of the conduction time T_{S} of the auxiliary switching device SW_{S} is decreased. That is, the length of the conduction time T_{ON} and the length of the conduction time T_{S} are adjusted such that the sum of the conduction time T_{ON} and the conduction time T_{S} is within the predetermined time range (substantially constant value). Thus, the power P to be transmitted can be increased (or decreased) with the frequency (f in FIG. 9) of the power P to be transmitted from the transmission coil L₁ maintained substantially constant (within the frequency range of 80 kHz to 90 kHz) while both the switching device SW and the auxiliary switching device SW_{S} perform the zero voltage switching operation. Furthermore, the power to be transmitted from the transmission coil L₁ is maintained constant, and the length of the conduction time T_{ON} and the length of the conduction time T_{S} are adjusted such that the frequency to be transmitted from the transmission coil L₁ can be changed while both the switching device SW and the auxiliary switching device SW_{S} perform the zero voltage switching operation. Thus, the operating frequency of the power supply unit 10 can be adjusted according to the characteristics of the power receiving unit 20. That is, the compatibility of the power supply unit 10 with the power receiving unit 20 can be improved. Furthermore, the peak of the operating frequency is shifted such that countermeasures against radiation noise can be implemented, or the operating frequency can be decreased to reduce heat generation from the wireless power supply device.

That is, the wireless power supply device 1 has two control degrees of freedom of the conduction time T_{ON} of the switching device SW and the conduction time T_{S} of the auxiliary switching device SW_{S}. Therefore, the wireless power supply device 1 can independently control the frequency of the power to be transmitted from the transmission coil L₁ and the amount of power to be transmitted from the transmission coil L₁.

### Advantages of First Embodiment

According to the first embodiment, the following advantages are achieved.

According to the first embodiment, as described above, the power supply unit 10 includes the auxiliary switching device SW_{S} connected in parallel to the transmission coil L₁ or the switching device SW, and the voltage limiting capacitor C_{S} connected in parallel to the transmission coil L₁ or the switching device SW to limit the resonance voltage generated by the transmission coil L₁ and the resonance capacitor C₁, and the auxiliary switching device SW_{S} is connected in series to the voltage limiting capacitor C_{S}. Accordingly, even when the amount of power to be transmitted is changed by changing the conduction time T_{ON} of the switching device SW, the conduction time T_{S} of the auxiliary switching device SW_{S} is adjusted such that the timing at which the resonance voltage becomes zero can be adjusted. Thus, the zero voltage switching operation of the switching device SW can be maintained. The auxiliary switching device SW_{S} and the voltage limiting capacitor C_{S} are simply provided in the power supply unit 10 such that the amount of power to be transmitted can be changed while the switching device SW performs the zero voltage switching operation, and thus the complex configuration of the wireless power supply device 1 can be reduced or prevented unlike a case in which a DC-DC converter including a relatively large number of devices is provided in the power supply unit 10 to change the amount of power to be transmitted. Consequently, zero voltage switching with low switching loss can be maintained, and the amount of power to be transmitted can be changed while the complex and expensive configuration of the wireless power supply device 1 is reduced or prevented.

Furthermore, the zero voltage switching operation is performed in the entire range in which the amount of power to be transmitted is changed, and thus heat generation of the switching device SW due to switching of the switching device SW while a voltage is applied to the switching device SW can be reduced or prevented. Thus, the configuration of a cooling mechanism that cools the switching device SW can be simplified (downsized).

According to the first embodiment, as described above, the conduction time T_{ON} of the switching device SW and the conduction time T_{S} of the auxiliary switching device SW_{S} are controlled such that the frequency of the power to be transmitted from the transmission coil L₁ is within the predetermined frequency range. Accordingly, the conduction time T_{ON} of the switching device SW and the conduction time T_{S} of the auxiliary switching device SW_{S} are adjusted while the frequency of the power to be transmitted from the transmission coil L₁ is limited within the predetermined frequency range such that the amount of power to be transmitted can be changed.

According to the first embodiment, as described above, the frequency range is from 80 kHz to 90 kHz. Accordingly, the present disclosure can be applied to a wireless charging device for electric vehicles, for example, in which the frequency of power to be transmitted is limited to 80 kHz or more and 90 kHz or less by the Radio Law.

According to the first embodiment, as described above, the sum of the conduction time T_{ON} of the switching device SW and the conduction time T_{S} of the auxiliary switching device SW_{S} is controlled to be within the predetermined time range. One cycle of the power (AC) to be transmitted is approximately represented by the sum of the conduction time T_{ON} of the switching device SW, the conduction time T_{S} of the auxiliary switching device SWₛ, and the period of time over which the resonance voltage changes (increases or decreases), and the period of time over which the resonance voltage changes is substantially constant, and thus the sum of the conduction time T_{ON} of the switching device SW and the conduction time T_{S} of the auxiliary switching device SW_{S} is controlled to be within the predetermined time range such that the cycle (frequency) of the power (AC) to be transmitted can be substantially constant.

According to the first embodiment, as described above, the capacitance of the voltage limiting capacitor C_{S} is five or more times larger than the capacitance of the resonance capacitor C₁. Accordingly, when the resonance voltage generated by the transmission coil L₁ and the resonance capacitor C₁ is increasing, the auxiliary switching device SW_{S} is turned on such that the resonance voltage is fixed (clamped) to substantially the same voltage as the voltage of the voltage limiting capacitor C_{S} having a larger capacitance. Consequently, application of a relatively high resonance voltage peak voltage to the switching device SW or the like is reduced or prevented, and thus a low breakdown voltage device can be selected for the switching device SW or the like.

According to the first embodiment, as described above, the power supply unit 10 includes the resonance voltage detection circuit 31a and the resonance voltage detection circuit 32a to detect the resonance voltage generated by the transmission coil L₁ and the resonance capacitor C₁, the turn-on control circuit 31 is operable to control the turn-on timing of the switching device SW based on the resonance voltage detected by the resonance voltage detection circuit 31a, and the turn-on control circuit 32 is operable to control the turn-on timing of the auxiliary switching device SW_{S} based on the resonance voltage detected by the resonance voltage detection circuit 32a. Accordingly, the resonance voltage detection circuit 31a and the resonance voltage detection circuit 32a can reliably detect the zero crossing point of the resonance voltage (the point at which the magnitude of the resonance voltage becomes zero), and thus the switching device SW and the auxiliary switching device SW_{S} can be reliably turned on (reliably perform the zero voltage switching operation) with a zero resonance voltage.

According to the first embodiment, as described above, a resonance operation is performed by the transmission coil L₂ and the resonance capacitor C₂ in the power receiving unit 20, and thus the transmission power can be increased by a resonance action in magnetic coupling.

### Second Embodiment

The configuration of a wireless power supply system 200 according to a second embodiment is now described with reference to FIG. 10. In the wireless power supply system 200, one resonance voltage detection circuit 231a is provided in a controller 230, unlike the first embodiment in which the two resonance voltage detection circuits 31a and 32a are provided.

In the wireless power supply system 200, similarly to the first embodiment, a turn-on control circuit 231 controls the turn-on timing of a switching device SW based on a resonance voltage detected by the resonance voltage detection circuit 231a. A turn-on control circuit 232 controls the turn-on timing of an auxiliary switching device SW_{S} based on a gate signal (gate voltage V_{g}) of the switching device SW turned on based on the resonance voltage detected by the resonance voltage detection circuit 231a. The turn-on control circuit 231 and the turn-on control circuit 232 are examples of a first turn-on control circuit and a second turn-on control circuit, respectively.

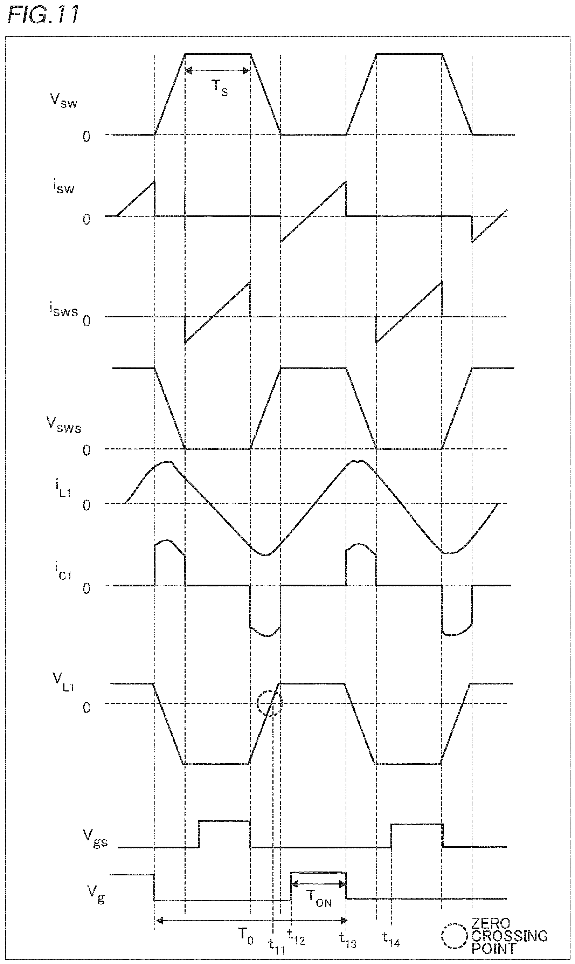

Specifically, as shown in FIG. 11, the auxiliary switching device SW_{S} is turned off, a voltage V_{L1} (resonance voltage) across a transmission coil L₁ gradually increases, and the resonance voltage detection circuit 231a detects the zero crossing point (time t₁₁) of the voltage V_{L1} across the transmission coil L₁. Then, the resonance voltage detection circuit 31a switches the gate voltage V_{g} of the switching device SW from an L level to an H level at time t₁₂ based on the zero crossing point (time t₁₁). Then, a cycle synchronization circuit 232b of the turn-on control circuit 232 switches the gate voltage V_{gs} of the auxiliary switching device SW_{S} from an L level to an H level at time t₁₄ after the elapse of a preset period of time from time t₁₃ at which the gate voltage V_{g} of the switching device SW is switched from the H level to the L level. Thus, the auxiliary switching device SW_{S} is turned on.

The remaining configurations of the second embodiment are similar to those of the first embodiment.

### Advantages of Second Embodiment

According to the second embodiment, the following advantages are achieved.

According to the second embodiment, as described above, the power supply unit 10 includes the resonance voltage detection circuit 231a to detect the resonance voltage generated by the transmission coil L₁ and a resonance capacitor C₁, the turn-on control circuit 231 is operable to control the turn-on timing of the switching device SW based on the resonance voltage detected by the resonance voltage detection circuit 231a, and the turn-on control circuit 232 is operable to control the turn-on timing of the auxiliary switching device SW_{S} based on the gate signal of the switching device SW. Accordingly, the turn-on timings of both the switching device SW and the auxiliary switching device SW_{S} can be controlled based on the resonance voltage detected by one resonance voltage detection circuit 231a, and thus the configuration of a wireless power supply device 1 can be simplified (downsized).

### Third Embodiment

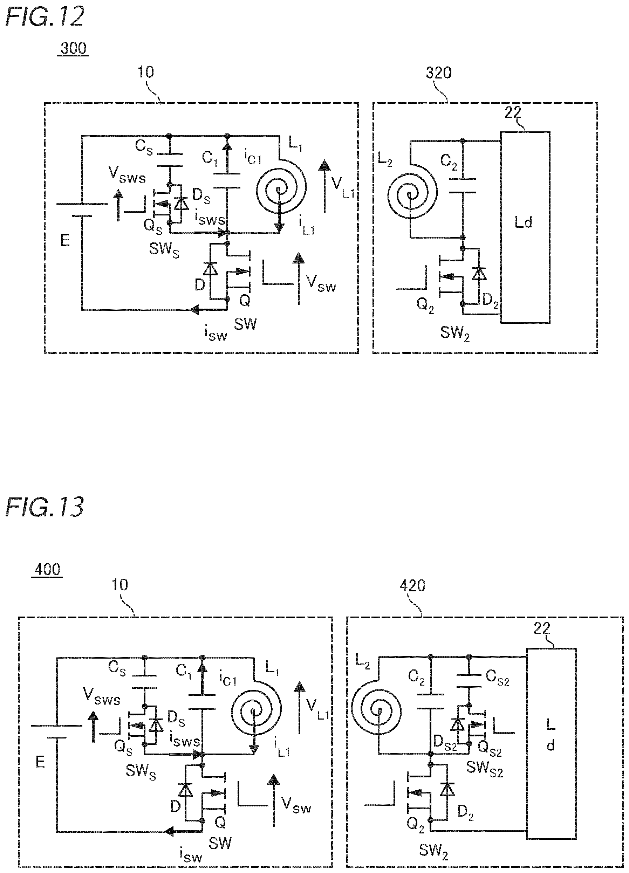

The configuration of a wireless power supply system 300 according to a third embodiment is now described with reference to FIG. 12. The wireless power supply system 300 is a bidirectional wireless power supply system capable of bidirectionally supplying power between a power supply unit 10 and a power receiving unit 320.

In the wireless power supply system 300, the configuration of the power supply unit 10 is similar to that of the first embodiment (or the second embodiment).

In the third embodiment, the power receiving unit 320 includes, as a rectifier circuit, a switching device SW₂ including a transistor Q₂ and a diode D₂ connected in parallel to each other. The diode D₂ is connected in antiparallel to the transistor Q₂. The transistor Q₂ is an N-type MOSFET, for example. The transistor Q₂ may be a self-turn-off switching device (such as an IGBT) other than a MOSFET. The current capacity of the switching device SW₂ is equivalent to the current capacity of the switching device SW. The transistor Q₂ is an example of a switch. The diode D₂ is an example of a rectifying device. The switching device SW₂ is an example of a second switching device.

In the power receiving unit 320, the positive side of a transmission coil L₂, the positive side of a resonance capacitor C₂, and the positive side of a load 22 are electrically connected to each other. The negative side of the transmission coil L₂, the negative side of the resonance capacitor C₂, and a drain (a cathode of the diode D₂) of the transistor Q₂ are electrically connected to each other. A source (an anode of the diode D₂) of the transistor Q₂ and the negative side of the load 22 are electrically connected to each other.

A turn-on control circuit (not shown) is provided in the power receiving unit 320. The turn-on control circuit controls the turn-on timing of the switching device SW₂ based on a resonance voltage generated by the transmission coil L₂ and the resonance capacitor C₂ such that the switching device SW₂ performs a zero voltage switching operation.

The remaining configurations of the third embodiment are similar to those of the first embodiment (or the second embodiment).

### Advantages of Third Embodiment

According to the third embodiment, the following advantages are achieved.

According to the third embodiment, as described above, the power receiving unit 320 includes, as a rectifier circuit, the switching device SW₂ including the transistor Q₂ and the diode D₂ connected in parallel to each other. Accordingly, power can be transmitted from the power receiving unit 320 to the power supply unit 10 by controlling turning on and off of the switching device SW₂. That is, the wireless power supply system 300 can be a bidirectional wireless power supply system.

### Fourth Embodiment

The configuration of a wireless power supply system 400 according to a fourth embodiment is now described with reference to FIG. 13. The wireless power supply system 400 is obtained by adding an auxiliary switching device SW_{S2} and a voltage limiting capacitor CS₂ to the wireless power supply system 300 according to the third embodiment. The wireless power supply system 400 is a bidirectional wireless power supply system capable of bidirectionally supplying power between a power supply unit 10 and a power receiving unit 420. The voltage limiting capacitor C_{S2} is an example of a second voltage limiting capacitor. The auxiliary switching device SW_{S2} is an example of a second auxiliary switching device.

In the wireless power supply system 400, the configuration of the power supply unit 10 is similar to that of the first to third embodiments.

In the fourth embodiment, the power receiving unit 420 includes an auxiliary switching device SW_{S2} and a voltage limiting capacitor C_{S2}. The auxiliary switching device SW_{S2} is connected in parallel to a transmission coil L₂ or a switching device SW₂ (the transmission coil L₂ in the fourth embodiment) and is connected in series to the voltage limiting capacitor C_{S2}. The voltage limiting capacitor C_{S2} is connected in parallel to the transmission coil L₂ or the switching device SW₂ (the transmission coil L₂ in the fourth embodiment) to limit a resonance voltage generated by the transmission coil L₂ and a resonance capacitor C₂.

The auxiliary switching device SW_{S2} includes a transistor Q_{S2} and a diode D_{S2} connected in antiparallel to the transistor Q_{S2}. The transistor Q_{S2} is an N-type MOSFET, for example. The transistor Q_{S2} may be a self-turn-off switching device (such as an IGBT) other than a MOSFET.

In the fourth embodiment, the capacitance of the voltage limiting capacitor C_{S2} is five or more times larger than the capacitance of the resonance capacitor C₂. For example, the capacitance of the resonance capacitor C₂ is 0.1 µF. The capacitance of the voltage limiting capacitor C_{S2} is 0.5 µF or more and 5 µF or less, for example.

In the power receiving unit 420, the positive side of the transmission coil L₂, the positive side of the resonance capacitor C₂, the positive side of the voltage limiting capacitor C_{S2}, and the positive side of a load 22 are electrically connected to each other. The negative side of the voltage limiting capacitor C_{S2} and a drain (a cathode of the diode D_{S2}) of the transistor Q_{S2} of the auxiliary switching device SW_{S2} are electrically connected to each other. The negative side of the transmission coil L₂, the negative side of the resonance capacitor C₂, a source (an anode of the diode D_{S2}) of the transistor Q_{S2} of the auxiliary switching device SW_{S2}, and a drain (a cathode of a diode D₂) of a transistor Q₂ are electrically connected to each other. A source (an anode of the diode D₂) of the transistor Q₂ and the negative side of the load 22 are electrically connected to each other.

A turn-on control circuit 31 and a turn-on control circuit 32 (not shown) are provided in the power receiving unit 420, similarly to the first embodiment (or the second embodiment). The turn-on control circuit 31 controls the turn-on timing of the switching device SW₂ based on the resonance voltage generated by the transmission coil L₂ and the resonance capacitor C₂, and the turn-on control circuit 32 controls the turn-on timing of the auxiliary switching device SW_{S2} based on the resonance voltage such that the switching device SW₂ and the auxiliary switching device SW_{S2} perform a zero voltage switching operation.

The remaining configurations of the fourth embodiment are similar to those of the first to third embodiments.

### Advantages of Fourth Embodiment

According to the fourth embodiment, the following advantages are achieved.

According to the fourth embodiment, as described above, the power receiving unit 420 includes the auxiliary switching device SW_{S2} connected in parallel to the transmission coil L₂ or the switching device SW₂, and the voltage limiting capacitor C_{S2} connected in parallel to the transmission coil L₂ or the switching device SW₂ to limit the resonance voltage generated by the transmission coil L₂ and the resonance capacitor C₂, and the auxiliary switching device SW_{S2} is connected in series to the voltage limiting capacitor C_{S2}. Accordingly, even when power is transmitted from the power receiving unit 420 to the power supply unit 10, the amount of power to be transmitted can be changed while the switching device SW₂ and the auxiliary switching device SW_{S2} perform the zero voltage switching operation and the frequency of the power to be transmitted is within a predetermined frequency range.

According to the fourth embodiment, as described above, the capacitance of the voltage limiting capacitor C_{S2} is five or more times larger than the capacitance of the resonance capacitor C₂. Accordingly, when the resonance voltage generated by the transmission coil L₂ and the resonance capacitor C₂ is increasing, the auxiliary switching device SW_{S2} is turned on such that the resonance voltage is stably clamped to the voltage of the voltage limiting capacitor C_{S2} having a larger capacity. Consequently, application of a relatively high resonance voltage peak voltage to the switching device SW₂ or the like is reduced or prevented, and thus a low breakdown voltage device can be selected for the switching device SW₂ or the like.

### Modified Examples

The embodiments disclosed this time must be considered as illustrative in all points and not restrictive. The scope of the present disclosure is not shown by the above description of the embodiments but by the scope of claims for patent, and all modifications (modified examples) within the meaning and scope equivalent to the scope of claims for patent are further included.

For example, while the example in which the resonance capacitor C₁ is connected in parallel to the transmission coil L₁ has been shown in each of the aforementioned first to fourth embodiments, the present disclosure is not limited to this. For example, the resonance capacitor C₁ may be connected in parallel to the switching device SW. Alternatively, a plurality of resonance capacitors C₁ may be connected in parallel to both the transmission coil L₁ and the switching device SW. Furthermore, similarly, the resonance capacitor C₂ according to the fourth embodiment may be connected in parallel to the switching device SW₂. Alternatively, a plurality of resonance capacitors C₂ may be connected in parallel to both the transmission coil L₂ and the switching device SW₂.

While the example in which the conduction time T_{ON} of the switching device SW and the conduction time T_{S} of the auxiliary switching device SW_{S} are controlled such that the frequency of the power to be transmitted from the transmission coil L₁ is within the range of 80 kHz to 90 kHz has been shown in each of the aforementioned first to fourth embodiments, the present disclosure is not limited to this. For example, the conduction time T_{ON} and the conduction time T_{S} may be controlled such that the frequency of the power to be transmitted is within a frequency range different from the range of 80 kHz to 90 kHz. Alternatively, the conduction time T_{ON} and the conduction time T_{S} may be controlled such that the frequency of the power to be transmitted varies in a wider range than the range of 80 kHz to 90 kHz. Furthermore, the conduction time T_{ON} of the switching device SW₂ and the conduction time T_{S} of the auxiliary switching device SW_{S2} in the power receiving unit 420 according to the fourth embodiment may be controlled as described above, similarly to the conduction time T_{ON} of the switching device SW and the conduction time T_{S} of the auxiliary switching device SW_{S}.

While the example in which the capacitance of the voltage limiting capacitor C_{S} is five or more times larger than the capacitance of the resonance capacitor C₁ has been shown in each of the aforementioned first to fourth embodiments, the present disclosure is not limited to this. According to an empirical rule, necessary and sufficient voltage stability is obtained during clamping when the capacitance of the voltage limiting capacitor C_{S} is five or more times the capacitance of the resonance capacitor C₁, but the capacitance of the voltage limiting capacitor C_{S} may be less than five times the capacitance of the resonance capacitor C₁ as long as ripples are allowed to be included within an allowable range, for example. Similarly, the capacitance of the voltage limiting capacitor C_{S2} may be less than five times the capacitance of the resonance capacitor C₂.

### Description of Reference Numerals

1: wireless power supply device
10: power supply unit
20, 320, 420: power receiving unit
21, 21a to 21c: rectifier circuit
22, 22a to 22c: load
30: controller
31: turn-on control circuit (first turn-on control circuit)
31a: resonance voltage detection circuit (first resonance voltage detection circuit)
31b: resonance voltage detection circuit (second resonance voltage detection circuit)
32: turn-on control circuit (second turn-on control circuit)
100, 200, 300, 400: wireless power supply system
230: controller
231: turn-on control circuit (first turn-on control circuit)
231a: resonance voltage detection circuit
232: turn-on control circuit (second turn-on control circuit)
C₁: resonance capacitor (first resonance capacitor)
C₂: resonance capacitor (second resonance capacitor)
C_{S}: voltage limiting capacitor (first voltage limiting capacitor)
C_{S2}: voltage limiting capacitor (second voltage limiting capacitor)
D₂: diode (rectifying device)
E: DC power supply
L₁: transmission coil (first transmission coil)
L₂: transmission coil (second transmission coil)
SW: switching device (first switching device)
SW₂: switching device (second switching device)
SW_{S}: auxiliary switching device (first auxiliary switching device)
SW_{S2}: auxiliary switching device (second auxiliary switching device)
T_{ON}: conduction time (of the switching device)
T_{S}: conduction time (of the auxiliary switching device)
Q₂: transistor (switch)

## Claims

1. A wireless power supply device being single-ended, the wireless power supply device comprising:
a power supply unit to supply power to a power receiving unit; and
a controller configured or programmed to control the power supply unit; wherein
the power supply unit includes:
a transmission coil and a switching device connected in series to a DC power supply;
a resonance capacitor connected in parallel to at least one of the transmission coil or the switching device;
an auxiliary switching device connected in parallel to the transmission coil or the switching device; and
a voltage limiting capacitor connected in parallel to the transmission coil or the switching device to limit a resonance voltage generated by the transmission coil and the resonance capacitor;
the auxiliary switching device is connected in series to the voltage limiting capacitor;
the controller includes:
a first turn-on control circuit to control a turn-on timing of the switching device based on the resonance voltage generated by the transmission coil and the resonance capacitor; and
a second turn-on control circuit to control a turn-on timing of the auxiliary switching device based on a gate signal of the switching device or the resonance voltage generated by the transmission coil and the resonance capacitor; and
the switching device and the auxiliary switching device are operable to perform a zero voltage switching operation.

2. The wireless power supply device according to claim 1, wherein a conduction time of the switching device and a conduction time of the auxiliary switching device are controlled such that a frequency of power to be transmitted from the transmission coil is within a predetermined frequency range.

3. The wireless power supply device according to claim 2, wherein the frequency range is from 80 kHz to 90 kHz.

4. The wireless power supply device according to any one of claims 1 to 3, wherein a sum of a conduction time of the switching device and a conduction time of the auxiliary switching device is controlled to be within a predetermined time range.

5. The wireless power supply device according to any one of claims 1 to 4, wherein a capacitance of the voltage limiting capacitor is five or more times larger than a capacitance of the resonance capacitor.

6. The wireless power supply device according to any one of claims 1 to 5, wherein
the power supply unit further includes a first resonance voltage detection circuit and a second resonance voltage detection circuit to detect the resonance voltage generated by the transmission coil and the resonance capacitor;
the first turn-on control circuit is operable to control a turn-on timing of the switching device based on the resonance voltage detected by the first resonance voltage detection circuit; and
the second turn-on control circuit is operable to control a turn-on timing of the auxiliary switching device based on the resonance voltage detected by the second resonance voltage detection circuit.

7. The wireless power supply device according to any one of claims 1 to 5, wherein
the power supply unit further includes a resonance voltage detection circuit to detect the resonance voltage generated by the transmission coil and the resonance capacitor;
the first turn-on control circuit is operable to control a turn-on timing of a gate signal of the switching device based on the resonance voltage detected by the resonance voltage detection circuit; and
the second turn-on control circuit is operable to control a turn-on timing of the auxiliary switching device based on the gate signal of the switching device.

8. A wireless power supply system being single-ended, the wireless power supply system comprising:
a power supply unit;
a power receiving unit to which power is supplied by the power supply unit; and
a controller configured or programmed to control the power supply unit; wherein
the power supply unit includes:
a first transmission coil and a first switching device connected in series to a DC power supply;
a first resonance capacitor connected in parallel to at least one of the first transmission coil or the first switching device;
a first auxiliary switching device connected in parallel to the first transmission coil or the first switching device; and
a first voltage limiting capacitor connected in parallel to the first transmission coil or the first switching device to limit a resonance voltage generated by the first transmission coil and the first resonance capacitor;
the first auxiliary switching device is connected in series to the first voltage limiting capacitor;
the power receiving unit includes:
a second transmission coil;
a second resonance capacitor and a rectifier circuit connected in parallel or in series to the second transmission coil; and
a load connected to the rectifier circuit; and
the controller includes:
a first turn-on control circuit to control a turn-on timing of the first switching device based on the resonance voltage generated by the first transmission coil and the first resonance capacitor; and
a second turn-on control circuit to control a turn-on timing of the first auxiliary switching device based on a gate signal of the first switching device or the resonance voltage generated by the first transmission coil and the first resonance capacitor; and
the first switching device and the first auxiliary switching device are operable to perform a zero voltage switching operation.

9. The wireless power supply system according to claim 8, wherein the power receiving unit further includes, as the rectifier circuit, a second switching device including a switch and a rectifying device connected in parallel to each other.

10. The wireless power supply system according to claim 9, wherein
the power receiving unit further includes:
a second auxiliary switching device connected in parallel to the second transmission coil or the second switching device; and
a second voltage limiting capacitor connected in parallel to the second transmission coil or the second switching device to limit a resonance voltage generated by the second transmission coil and the second resonance capacitor; and
the second auxiliary switching device is connected in series to the second voltage limiting capacitor.

11. The wireless power supply system according to claim 10, wherein a capacitance of the second voltage limiting capacitor is five or more times larger than a capacitance of the second resonance capacitor.
